# EUROPEAN PATENT SPECIFICATION

(11) **EP 1 141 792 B1**
(45) Date of publication and mention of the grant of the patent: **04.06.2003**
(21) Application number: 00900243.7
(22) Date of filing: 10.01.2000
(51) Int. Cl.: G05B 19/042

(54) **MONITORING ASSEMBLY**
ÜBERWACHUNGSSYSTEM
ENSEMBLE DE CONTROLE

(30) Priority: 14.01.1999 GB 9900805
(43) Date of publication of application: 10.10.2001
(73) Proprietor: De La Rue International Limited, Basingstoke, Hampshire RG22 4BS (GB)
(72) Inventor: COTTRELL, Ronald, Alec, Fareham, Hampshire PO17 6BX (GB)
(74) Representative: Skone James, Robert Edmund
(86) International application number: GB0000040
(87) International publication number: WO00042477

(56) References cited:
- EP-A- 0 537 513
- EP-A- 0 612 043
- DE-A- 4 103 832
- US-A- 4 559 452
- US-A- 4 650 991
- US-A- 4 875 589
- US-A- 5 309 515
- US-A- 5 815 592
- J. Lin 'Intelligente Sensoren für die Produktautomatisierung'; etz, number 4-5, 1997, pages 36, 37, XP-000721784
- B. Wenzel 'Kommandoprotokoll für intelligente Sensoren', Elektronik 12/97, pages 55-59, XP-000234717

## Description

The invention relates to a bank note processing machine monitoring assembly, for monitoring the performance of a banknote processing machine. Such banknote processing machines include banknote acceptors, dispensers, sorters and counters.

In a banknote processing control system, sensors are required to provide data on the presence and position of notes in the machine and to sense the presence and position of other items such as mechanisms, paper and tape supplies. Several different types of sensing are required, including for example:
1. Sensing of notes moving in the transport. (Track sensors). Required to accurately detect the front and back edge of a note as it passes at high speed, usually over a small sensing distance.
2. Sensing of notes in a stacking station. (Long range sensing). Required to detect one or more stationary notes in a pack. Response time is not critical but it is usually over a long sensing distance.
3. Sensing of mechanisms or other items using optical sensors.
4. Sensing of mechanisms or other items using non-optical sensors (eg Hall effect devices/micro switches etc).

The types of sensor used at each location will vary depending upon the most suitable way of carrying out the sensing process. Typically, optical sensors are used to monitor the progress of sheets but other sensors such as magnetic and Hall effect sensors are also used. Typically, the main machine controller interfaces directly with each sensor, the sensing interfaces being specific to the different sensor types and functions. This means that the machine controller must be designed for each specific machine and the combination of sensors required.

DE4103832 describes apparatus for testing the authenticity of currency, credit cards and the like using capacitive, electro-optical or millimetre wave sensors arranged along a test section.

An apparatus for detection of the edge of a semitransparent plane substance using a plurality of light sources and photodetectors is disclosed in US4559452.

"Intelligent Sensors for Production Automation" by Jie Lin discusses the emergence of intelligent sensors in the automation of production technology. Multifunctional sensors that can communicate with a host processor via a bus are mentioned.

"Kommandoprotokoll für Intelligente Sensoren" by Dipl.-Ing Bernd Wenzel describes a command protocol for sensors having integral processors that can be communicated with by an industry standard interface.

US4875589 describes a sensor for use on a banknote sorter for detecting characteristics of banknotes such as pattern and authenticity. The accumulation of yes/no replies from those sensors is used to determine whether a banknote corresponds to a known type.

In accordance with the present invention, there is provided a banknote processing machine monitoring assembly for use with a banknote processing machine, the assembly comprising a plurality of substantially identical sensor modules, each sensor module comprising a sensor providing an output signal corresponding to a respective condition of the banknote processing machine, and a processor for receiving and processing the sensor output signal and for generating an output in accordance with whether or not the condition has been sensed, characterised in that the processors of at least two modules are adapted to monitor and respond to the associated sensor in different ways but to generate outputs of a similar type independent of the sensor concerned.

We have devised a modular approach to the use of sensors in which self-contained sensor modules are provided. Each sensor module includes its own processor which interfaces with the corresponding sensor but provides an output signal of a common type (typically indicating a YES/NO condition) to the main machine controller. The main machine controller therefore does not need to be adapted to each type of sensor used, the data appertaining to the sensor type being made available, for example, upon start up of the machine, thus significantly increasing flexibility in the use of such controllers and the ability to add or remove sensor modules as required.

Preferably, the sensor of at least one of the sensor modules can be calibrated, the respective sensor module processor being adapted to calibrate the sensor in response to a calibration command.

This provides a further useful advantage in that the processor also carries-out the calibration process which will vary from sensor to sensor. Again, the main machine controller does not need to take part in the calibration process. The calibration command will typically be generated by the main machine controller but could also be generated within the sensor module processor, for example at a particular time or in response to a start-up condition.

Typically, at least one of the sensors comprises a radiation emitter and a radiation detector positioned to sense the passage of an object. Such sensors are particularly convenient for sensing the passage of articles such as sheets where radiation from the emitter is obscured by the presence of the sheet so as to change a voltage in a circuit coupled with the detector, the voltage change being sensed by the processor.

In the case of radiation emitters and detectors, the sensor module processor may be adapted to control the operation of the radiation emitter, the processor being adapted to calibrate the sensor by monitoring the apparent response of the radiation detector when the radiation emitter is controlled to emit no radiation whereby
a) if the apparent response from the radiation detector indicates to the processor that radiation above a first level is detected, the processor determines that no sensor is present; and
b) if the apparent response from the radiation detector indicates to the processor that radiation is present at a level below the first level but above a second level, the processor determines a fault condition. This corresponds to too much ambient emission being sensed or the sensor is faulty.

Preferably, c) if the apparent response from the radiation detector indicates to the processor that radiation below the second level is detected, the processor increases the radiation intensity generated by the radiation emitter until the radiation detector indicates to the processor that the received radiation is at a sufficient level to drive the sensor response to a predetermined level.

This results in an automatic method for determining firstly whether a sensor is connected to the processor and, if it is, secondly automatically calibrating the sensor.

A problem which can arise within article processing machines, particularly sheet processing machines, is that the environment is dusty and dirt can accumulate on the radiation detectors and this needs to be accounted for. Conventionally, this is dealt with by varying the radiation output from the emitter to match the detector distance, sensitivity and cleanliness. This is done on system start-up. Once the radiation required has been established, no further adjustment is possible allowing dust build-up during operation to cause problems.

Typically, the sensor module processor is adapted to compare the sensor output signal with a threshold and to generate the said output in accordance with the relationship of the sensor output signal with the threshold. This threshold is conveniently defined with respect to previously determined upper and lower limits. For example, the threshold could be determined to be midway between the upper and lower limits.

In order to cope with dirt and dust build-up, the sensor module processor is preferably adapted to modify one or both of the upper and lower limits in accordance with received sensor output signals. In this way, continual adaption of the upper and lower limits, and hence the threshold with which the radiation detector output signal is compared, is achieved.

In one example, the upper and/or lower limits are modified by the sensor module processor if a predetermined number of sensor output signals fall outside the corresponding existing limit. Thus, the limits are not immediately modified as soon as a single received signal falls outside the limit but only after a predetermined number of such signals has fallen outside the limit. Usually, the predetermined number must occur for successive output signals.

Preferably, the processor of each sensor module can configure itself to the requirements of the or each sensor of the corresponding module. For example, the assembly may further comprise a store for storing data to enable the configuring process to be performed. Automatic configuration avoids the need for individually setting up each sensor.

An example of a banknote machine monitoring system will now be described with reference to the accompanying drawings, in which:-
Figure 1 is a block diagram of a sensor module; and,
Figure 2 is a block diagram of part of the banknote monitoring system.

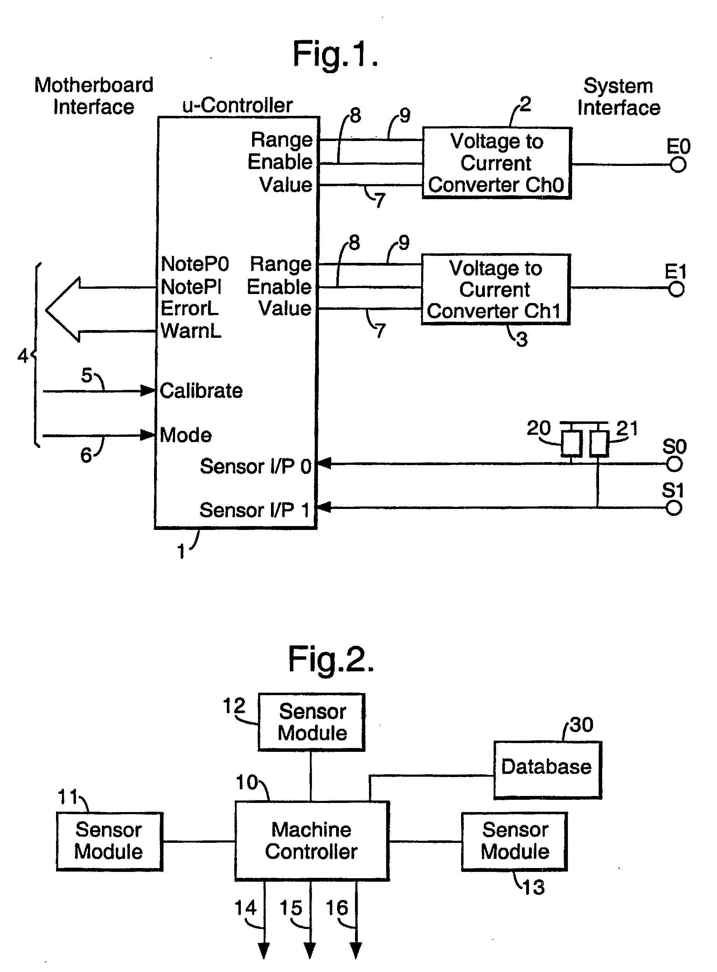

The sensor module shown in Figure 1 comprises a micro-controller 1 which may be a hard wired device or a suitably programmed microprocessor. The micro-controller is coupled to two optical emitters E0, E1 corresponding to channels 0 and 1 via respective voltage to current converters 2,3. The two optical emitters E0, E1 are positioned in association with respective sensors S0, S1 which are also connected to the micro-controller 1. Typically, the sensor emitter pairs will be positioned on opposite sides of a banknote feed path at laterally spaced positions.

As can be seen in Figure 2, the machine controller 10 is connected to a number of sensor modules 11-13 and in practice is likely to be connected to ten or more such modules. It is also connected to a database 30 which stores information relating to the sensors provided with each sensor module. In response to signals received from the sensor modules 11-13, the machine controller 10 controls operation of the machine such as the operation of diverters, stacker wheels and the like via control lines 14-16.

As explained above, other sensor modules may be provided with different types of sensor such as Hall effect sensors and the like and may also be used for monitoring the status of certain equipment or the position of movable elements such as banknote stacker wheels. The data defining the type of sensor connected to each module and the detector type operating parameters is made available from the database 30 (Figure 2) connected via the machine controller 10 to the micro-controller 1.

The micro-controller 1 and voltage to current converters 2,3 are housed on a compact and stand alone printed circuit board (PCB) which is designed to plug into a mother board such as a PC memory board (SIM). The PCB is reliant on the mother board for its commands and power supplies and as can be seen in Figure 1, the micro-controller is connected to the mother board via an 18 way 2mm pin header 4 which conveys signals from the micro-controller to the central machine controller 10 and receives signals from the machine controller 10 on a calibrate port 5. It also receives the data defining the type of sensor and, as necessary, its operating parameters from database 30 through a mode setting port 6.

Turning now to the micro-controller in more detail, typically this is a PIC micro-controller 16c711. This includes A/D converters for converting the voltage signals from the sensors S0, S1 directly, and for each emitter E0, E1 an output 7 to control the LED drive current level in response to a "Value" signal, an output 8 to switch ON and OFF the LED currents, and an output 9 to set the current sensitivity range to either c0-100mA or c0-1A. The outputs supplied to the machine controller 10 include outputs to indicate that a note is present and also certain error conditions.

The PCB operation is controlled by the PIC software allowing a simple hardware implementation. Typically, the signals received from the sensors S0, S1 are compared by the micro-controller 1 with predetermined stored thresholds, this process being implemented as software routines operating on digitised sensor data which has been input directly by the A/D converters. A binary output signal is then generated for supply to the machine controller 10 indicative of whether or not a note has been sensed.

The LED currents are controlled by a serially commanded current D/A converter. This is implemented as a digipot driving the respective voltage to current converter 2,3 with two range sensitivities controllable by the PIC. The digipot type may be specified to allow storage and recall of the "wiper" position on power up. The resistance of the digipot is changed by the PIC via a serial data port within the voltage to current converter and controlled by the "Value" signal which sends a serial data stream to define the "Wiper" position. It is configured to output 0-5V to the voltage to current converter 2,3. Each V/I converter 2,3 can be controlled to either provide continuous current or pulsed current depending on the operating mode selected. When operating as a long range sensor the current range is increased and the current is pulsed with a low duty cycle. The current range switching is achieved by the port line 9 via a FET to connect in a resistor which alters the V/I sensitivity.

The current is switched ON/OFF by shorting to ground the outputs of the digipot. PIC port lines (AMPSOEN and AMPS1EN) are used directly and are switched between logic low and high impedance.

If non-opto modes are used, the emitter current facility may be ignored.

The sensor gain is defined by pull-up resistors 20,21 on the PCB which have been found empirically to give good sensitivity with optosensors of the type used without over sensitivity to external light. The sensor signal therefore varies between 0V and 5V depending on the illumination level and how obscured it is. This signal passes directly (via filtering) to the U-controller 1 for A/D conversion. Non-opto sensor voltages must be in this range.

Each micro-controller 1 issues four types of output signal to the main machine controller 10 which are defined below.

### NOTEP0

A digital output signal from the adaptive sensor which indicates the presence of notes under the sensor head.

It is active in track sensor mode when a note is present under either of the sensor pairs in a track sensor.

It is active in long range mode when there is a note present under the sensor pair on channel 0. The meaning of this signal is changed if the ERRORL line is active.

### NOTEP1

A digital output signal from the adaptive sensor which indicates the presence of notes under the sensor head.

It is active in track sensor mode when a note is present under the sensor pair on channel 1. It is active in long range mode when there is a note present under the sensor pair on channel 1. The meaning of this signal is changed if the ERRORL line is active.

### WARNL

A digital output signal from the adaptive sensor which indicates a warning status. The signal is active either if after calibration the opto emitter current is greater than a preset amount or during operation if the working signal amplitude is less than a preset level. If this signal is active the circuit remains in operation. The meaning of this signal is changed if the ERRORL line is active.

### ERRORL

A digital output signal from the adaptive sensor which indicates an error status. This signal is active during all detectable errors including:-
Working signal amplitude too small to continue Unable to achieve calibration even at maximum current
Systems error - a logical error in the program.

As previously mentioned, the micro-controller 1 receives an input signal from the machine controller 10: a calibrate signal which forces a system re-start and recalibration of the sensors. Mode data from the database 30 is monitored on recognition of a calibrate signal and used to define the configuration of the sensor (i.e. whether it is to be a track sensor or a long range sensor).

At start-up and after certain reset conditions, the micro-controller 1 performs a calibration as a software routine which aims to set the level of emitter current so that the sensor voltage is maximised without saturating the receiver.

Calibration always operates in pulse mode to protect the emitters from over dissipation. The sensor voltage at zero emitter current is checked. If the sensor voltage is less than a minimum value the sensor is assumed to be not present because the sensor input has intentionally been shorted out to create a "no sensor" condition. If the sensor voltage is above the minimum but less than a maximum there is assumed to be a fault. The emitter current is then increased until the sensor voltage reaches a predetermined level (just avoiding saturation). This occurs for both channels separately. The calibration current levels are then recorded and used without changing until a further reset occurs.

If the sensor is not present calibration still occurs but the current is set to a low level. During calibration the four signals to the machine controller 10 (NOTEP0, NOTEP1, WARNL and ERRORL) are held high. This gives the opportunity to test the indicator lamps. The note present signals drive low when calibration is complete provided there are no calibration errors. (In this case they output the error number). The calibration routine will generate errors if unable to calibrate or warnings if the calibration is too high.

When a sensor module is operated under the track sensor mode, the micro-controller 1 monitors the sensors S0, S1 as fast as the software and A/D conversion will allow. Typically this is 50 microseconds per sample. Each channel is sampled in turn. The sample is compared to the current threshold for that channel and in this mode both sensor pairs act as a single logical sensor with NOTEP0 as the main output.

Output NOTEP0 is set if either sensor voltage is above its threshold. NOTEP1 is set if channel 1 is above its threshold. Consequently if both sensor voltages are below their thresholds NOTEP0 is reset. NOTEP1 is reset if channel 1 is below its threshold.

In the long range mode, response time is not as critical as in track sensor mode and so the sample rate is reduced in favour of pulsing a high current through the LEDs, which requires a "dead time" to prevent over dissipation of the LED components. Typically, each sensor is sampled every 10 milliseconds, each sensor pair acting as an independent sensor. The current for that channel is enabled and allowed to settle for c.175us. The sample is then converted and the current is disabled. Each channel is sampled in turn. The sample is compared to the current threshold for that channel. Output NOTEP0 is set if channel 0 is above its threshold. NOTEP1 is set if channel 1 is above its threshold. Consequently output NOTEP0 is reset if channel 0 is below its threshold. NOTEP1 is reset if channel 1 is below its threshold.

A particularly important aspect of the invention is the ability to adapt the threshold used by the micro-controller for comparison with the received sensor signals. The micro-controller 1 maintains for each channel, values for the current amplitude of the sensors high and low voltages. (Vmax and Vmin).

After sampling a channel the sample is compared to the current values of Vmax and Vmin. If the sample is higher a corresponding channel counter is incremented and if lower it is decremented. On roll over/under of the counter the current values of Vmax or Vmin are adjusted up or down. The new values of Vmax and Vmin are then used to calculate new threshold voltages for each channel, the threshold being set to (Vmax + Vmin)/2. This technique tracks the input signal amplitude and sets the threshold so that it is always in the middle of the signal. This adaption occurs independently for each channel and for both operating modes. Its primary function is to protect against the build up of contamination during running. The adaption process also creates a warning when the working signal becomes small. Finally it will generate an error if the signal degredation becomes too great for continued operation.

## Claims

1. A banknote processing machine monitoring assembly for use with a banknote processing machine, the assembly comprising a plurality of substantially identical sensor modules (11,12,13), each sensor module (11, 12, 13) comprising a sensor providing an output signal corresponding to a respective condition of the banknote processing machine, and a processor (1) for receiving and processing the sensor output signal and for generating an output in accordance with whether or not the condition has been sensed, **characterised in that** the processors (1) of at least two modules (11,12,13) are adapted to monitor and respond to the associated sensor in different ways but to generate outputs of a similar type independent of the sensor concerned.

2. An assembly according to claim 1, further comprising a central monitor coupled to the sensor modules (11,12,13) for receiving the outputs from the processors (1).

3. An assembly according to claim 2, wherein the central monitor is connected to or forms part of a machine controller (10) for the banknote processing machine.

4. An assembly according to any of the preceding claims, wherein the sensor of at least one of the sensor modules (11,12,13) can be calibrated, the respective sensor module processor (1) being adapted to calibrate the sensor in response to a calibration command.

5. An assembly according to any of the preceding claims, wherein each sensor comprises a radiation emitter (E0, E1) and a radiation detector (S0, S1).

6. An assembly according to claim 5, wherein the radiation emitter (E0, E1) generates optical radiation.

7. An assembly according to claim 5 or claim 6, when dependent on claim 4, wherein the sensor module processor (1) is adapted to control the operation of the radiation emitter (E0, E1), the processor (1) being adapted to calibrate the sensor by monitoring the apparent response of the radiation detector (S0, S1) when the radiation emitter (E0, E1) is caused to emit no radiation whereby
a) if the apparent response from the radiation detector (S0, S1) indicates to the processor (1) that radiation above a first level is detected, the processor (1) determines that no sensor is present; and
b) if the apparent response from the radiation detector (S0, S1) indicates to the processor (1) that radiation is present at a level below the first level but above a second level, the processor (1) determines a fault condition.

8. An assembly according to claim 7, further comprising:
c) if the apparent response from the radiation detector (S0, S1) indicates to the processor (1) that radiation below the second level is detected, the processor (1) increases the radiation intensity generated by the radiation emitter (E0, E1) until the radiation detector (S0, S1) indicates to the processor (1) that the received radiation is at a sufficient level to drive the sensor response to a predetermined level.

9. An assembly according to any of the preceding claims, wherein each of said at least two modules (11, 12, 13) has substantially the same construction.

10. An assembly according to claim 9, wherein each of said at least two modules (11, 12, 13) has a pair of substantially identical sensors connected to the sensor module processor (1).

11. An assembly according to claim 10, wherein the processor (1) of one of the two modules (11, 12, 13) is adapted to respond to each sensor individually and generate corresponding outputs.

12. An assembly according to claim 10 or claim 11, wherein the processor (1) of one of the two modules (11, 12, 13) is adapted to respond to the outputs of both sensors to generate a single output.

13. An assembly according to any of the preceding claims, wherein the sensor module processors (1) of the at least two sensor modules are adapted to monitor the output signals from the or each associated sensor at respective different regular, spaced intervals.

14. An assembly according to claim 13, wherein the intervals are substantially 50 microseconds and 10 milliseconds respectively.

15. An assembly according to claim 13 or claim 14, when dependent on any of claims 5 to 8, wherein the sensor module processor (1) causes the radiation emitter (E0, E1) to emit radiation at the said intervals.

16. An assembly according to any of the preceding claims, wherein the sensor module processor (1) is adapted to compare the sensor output signal with a threshold and to generate the said output in accordance with the relationship of the sensor output signal with the threshold.

17. An assembly according to claim 16, wherein the threshold is defined with respect to previously determined upper and lower limits.

18. An assembly according to claim 17, wherein the sensor module processor (1) is adapted to modify one or both of the upper and lower limits in accordance with received sensor output signals.

19. An assembly according to claim 18, wherein the upper and/or lower limits are modified by the sensor module processor (1) if a predetermined number of sensor output signals fall outside the corresponding existing limit.

20. An assembly according to any of the preceding claims, wherein the processor of each sensor module can configure itself to the requirements of the or each sensor of the corresponding module (11, 12, 13).

21. An assembly according to claim 20, further comprising a store for storing data to enable the configuring process to be performed.

22. An assembly according to at least claims 4 and 5, wherein the sensor module processor (1) is adapted to calibrate the sensor in a pulse mode.

23. An assembly according to any of the preceding claims, wherein the processors (1) of each module (11, 12, 13) are adapted to output a binary signal.

24. A banknote processing machine comprising a transport system for transporting banknotes along a processing path; a machine controller (10) for controlling operation of the transport system; and a monitoring assembly according to any of the preceding claims, one of said at least two sensor modules (11, 12, 13) monitoring the passage of banknotes along the processing path, and the other sensor module monitoring the presence of banknotes at a location in this banknote processing machine, the machine controller (10) being responsive to the monitoring assembly to control the transport system.

25. A machine according to claim 24, wherein the machine includes a stacking station, the other sensor module sensing banknotes at the stacking station.

## Patentansprüche

1. Banknotenverarbeitungsäutomatenüberwachungseinrichtung für einen Banknotenverarbeitungsautomaten, die eine Vielzahl weitgehend gleicher Sensormodule (11, 12, 13) aufweist, von denen jeder Sensormodul (11, 12, 13) einen Sensor, der ein Ausgangssignal entsprechend dem jeweiligen Zustand des Banknotenverarbeitungsautomaten erzeugt, und einen Prozessor (1) zum Empfangen und Verarbeiten des Sensor-Ausgangssignals und zum Erzeugen eines Ausgangssignals in Abhängigkeit davon, ob der Zustand vom Sensor festgestellt worden ist oder nicht, aufweist, **dadurch gekennzeichnet, daß** die Prozessoren (1) wenigstens zweier Module (11, 12, 13) so ausgebildet sind, daß sie auf verschiedene Weise den zugehörigen Sensor überwachen und auf diesen ansprechen, aber Ausgangssignale ähnlicher Art, unabhängig vom betreffenden Sensor, erzeugen.

2. Einrichtung nach Anspruch 1, die ferner eine zentrale Überwachungseinheit aufweist, die mit den Sensormodulen (11, 12, 13) zum Empfangen der Ausgangssignale der-Prozessoren (1) verbunden ist.

3. Einrichtung nach Anspruch 2, bei der die zentrale Überwachungseinheit mit einer Automatensteuerung (10) für den Banknotenverarbeitungsautomaten verbunden ist oder einen Teil der Automatensteuerung bildet.

4. Einrichtung nach einem der vorstehenden Ansprüche, bei der der Sensor wenigstens eines der Sensormodule (11, 12, 13) geeicht werden kann, wobei der jeweilige Sensormodulprozessor (1) so ausgebildet ist, daß er den Sensor in Abhängigkeit von einem Eichbefehl eicht.

5. Einrichtung nach einem der vorstehenden Ansprüche, bei der jeder Sensor einen Strahlungsemitter (E0, E1) und einen Strahlungsdetektor (S0, S1) aufweist.

6. Einrichtung nach Anspruch 5, bei der der Strahlungsemitter (E0, E1) eine optische Strahlung erzeugt.

7. Einrichtung nach Anspruch 5 oder Anspruch 6, zurückbezogen auf Anspruch 4, bei der der Sensormodulprozessor (1) so ausgebildet ist, daß er den Betrieb des Strahlungsemitters (E0, E1) steuert und den Sensor durch Überwachung der scheinbaren Antwort des Strahlungsdetektors (S0, S1) eicht, wenn der Strahlungsemitter (E0, E1) veranlaßt wird, keine Strahlung zu emittieren, so daß
a) wenn die scheinbare Antwort des Strahlungsdetektors (S0, S1) dem Prozessor (1) anzeigt, daß eine über einem ersten Pegel liegende Strahlung gemessen wurde, der Prozessor (1) entscheidet, daß kein Sensor vorhanden ist; und
b) wenn die scheinbare Antwort des Strahlungsdetektors (S0, S1) dem Prozessor (1) anzeigt, daß der Strahlungspegel unter dem ersten Pegel, jedoch über einem zweiten Pegel liegt, der Prozessor (1) entscheidet, daß ein Fehlerzustand vorliegt.

8. Einrichtung nach Anspruch 7, bei der,
c) wenn die scheinbare Antwort des Strahlungsdetektors (S0, S1) dem Prozessor (1) anzeigt, daß die Strahlung unter dem zweiten Pegel liegt, der Prozessor (1) die Intensität der durch den Strahlungsemitter (E0, E1) erzeugten Strahlung so lange erhöht, bis der Strahlungsdetektor (S0 S1) dem Prozessor (1) anzeigt, daß die Intensität der empfangenen Strahlung ausreichend ist, die Sensorantwort auf einen vorbestimmten Pegel zu treiben.

9. Einrichtung nach einem der vorstehenden Ansprüche, bei der die erwähnten beiden Module (11, 12, 13) im wesentlichen den gleichen Aufbau haben.

10. Einrichtung nach Anspruch 9, bei der. jedes der beiden Module (11, 12, 13) zwei im wesentlichen gleiche Sensoren aufweist, die mit dem Sensormodulprozessor (1) verbunden sind.

11. Einrichtung nach Anspruch 10, bei der der Prozessor (1) eines der beiden Module (11, 12, 13) so ausgebildet ist, daß er individuell auf jeden Sensor anspricht und entsprechende Ausgangssignale erzeugt.

12. Einrichtung nach Anspruch 10 oder Anspruch 11, bei der der Prozessor (1) eines der beiden Module (11, 12, 13) so ausgebildet ist, daß er auf die Ausgangssignale beider Sensoren mit der Erzeugung eines einzigen Ausgangssignals anspricht.

13. Einrichtung nach einem der vorstehenden Ansprüche, bei der die Sensormodulprozessoren (1) der erwähnten beiden Sensormodule so ausgebildet sind, daß sie die Ausgangssignale von dem oder jedem zugehörigen Sensor jeweils in verschiedenen, regelmäßig auseinanderliegenden Zeitabschnitten überwachen.

14. Einrichtung nach Anspruch 13, bei der die Zeitabschnitte jeweils 50 Mikrosekunden und 10 Millisekunden betragen.

15. Einrichtung nach Anspruch 13 oder Anspruch 14, zurückbezogen auf einen der Ansprüche 5 bis 8, bei der der Sensormodulprozessor (1) den Strahlungsemitter (E0, E1) zur Abgabe der Strahlung in den erwähnten Zeitabschnitten veranlaßt.

16. Einrichtung nach einem der vorstehenden Ansprüche, bei der der Sensormodulprozessor (1) so ausgebildet ist, daß er das Sensorausgangssignal mit einem Schwellwert vergleicht und das erwähnte Ausgangssignal in Abhängigkeit von dem Verhältnis der Größe des Sensorausgangssignals zu dem Schwellwert erzeugt.

17. Einrichtung nach Anspruch 16, bei der der Schwellwert in bezug auf vorhergehende vorbestimmte obere und untere Grenzen bestimmt ist.

18. Einrichtung Anspruch 17, bei der der Sensormodulprozessor (1) so ausgebildet ist, daß er den einen oder beide Grenzwerte in Abhängigkeit von den empfangenen Sensorausgangssignalen ändert.

19. Einrichtung nach Anspruch 18, bei der der obere und/oder untere Grenzwert durch den Sensormodul (1) geändert wird oder werden, wenn eine vorbestimmte Anzahl von Sensorausgangssignalen außerhalb des entsprechenden augenblicklichen. Grenzwerts liegt.

20. Einrichtung nach einem der vorstehenden Ansprüche, bei der der Prozessor jedes Sensormoduls sich selbst an die Anforderungen des oder jedes Sensors des entsprechenden Moduls (11, 12, 13) konfigurieren kann.

21. Einrichtung nach Anspruch 20, die ferner eine Speicher zum Speichern von Daten aufweist, um den durchzuführenden Konfigurierungsprozeß zu ermöglichen.

22. Einrichtung nach wenigstens den Ansprüchen 4 und 5, bei der der Sensormodulprozessor (1) so ausgebildet ist, daß er den Sensor in einer Impulsbetriebsart eicht.

23. Einrichtung nach einem der vorstehenden Ansprüche, bei dem die Prozessoren (1) jedes Moduls (11, 12, 13) so ausgebildet sind, daß sie ein binäres Ausgangssignal erzeugen.

24. Banknotenverarbeitungsautomat mit einer Fördereinrichtung zum Befördern von Banknoten längs einer Verarbeitungsbahn, einer Automatensteuerung (10) zum Steuern des Betriebs der Fördereinrichtung; und einer Überwachungseinrichtung nach einem der vorstehenden Ansprüche, wobei eines der beiden erwähnten Sensormodule (11, 12, 13) den Durchgang von Banknoten längs der Verarbeitungsbahn überwacht und das andere Sensormodul das Vorhandensein von Banknoten an einer Stelle in diesem Banknotenverarbeitungsautomaten überwacht, wobei die Automatensteurung (10) die Fördereinrichtung in Abhängigkeit von der Überwachungseinrichtung steuert.

25. Automat nach Anspruch 24 mit einer Stapelstation, wobei das andere Sensormodul die Banknoten in der Stapelstation fühlt.

## Revendications

1. Ensemble de surveillance de machine de traitement de billets de banque, pour une utilisation avec une machine de traitement de billets de banque, l'ensemble comprenant une pluralité de modules de détection (11, 12, 13) sensiblement identiques, chaque module (11, 12, 13) de détection comprenant un détecteur délivrant un signal de sortie correspondant à un état spécifique de la machine de traitement des billets de banque, et un processeur (1) pour recevoir et traiter le signal émis par le détecteur, et pour générer un signal de sortie selon que l'état a ou non été détecté, **caractérisé en ce que** les processeurs (1) d'au moins deux modules (11, 12, 13) sont adaptés pour surveiller, et répondre au détecteur associé de différentes façons, mais pour générer des signaux de sortie d'un type similaire, indépendamment du détecteur concerné.

2. Ensemble selon la revendication 1, comprenant en outre un moniteur central connecté aux modules de détection (11, 12, 13) pour recevoir les signaux de sortie des processeurs (1).

3. Ensemble selon la revendication 2, dans lequel le moniteur central est connecté à, ou fait partie d'un contrôleur (10) de machine, pour la machine de traitement de billets de banque.

4. Ensemble selon l'une quelconque des revendications précédentes, dans lequel le détecteur d'au moins l'un des modules de détection (11, 12, 13) peut être étalonné, le processeur (1) du module de détection correspondant étant adapté pour étalonner le détecteur en réponse à une instruction d'étalonnage.

5. Ensemble selon l'une quelconque des revendications précédentes, dans lequel chaque détecteur comprend un émetteur de rayonnement (E0, E1) et un détecteur de rayonnement (S0, S1).

6. Ensemble selon la revendication 5, dans lequel l'émetteur de rayonnement (E0, E1) génère un rayonnement optique.

7. Ensemble selon la revendication 5 ou 6, lorsqu'elle dépend de la revendication 4, dans lequel le processeur (1) du module de détection est adapté afin de commander le fonctionnement de l'émetteur de rayonnement (E0, E1), le processeur (1) étant adapté afin d'étalonner le détecteur en surveillant la réponse apparente du détecteur de rayonnement (S0, S1) lorsque l'émetteur de rayonnement (E0, E1) est amené à émettre un rayonnement nul de sorte que
a) si la réponse apparente en provenance du détecteur de rayonnement (S0, S1) indique au processeur (1) qu'un rayonnement supérieur à un premier niveau est détecté, le processeur (1) détermine qu'il n'y a pas de détecteur présent; et
b) si la réponse apparente en provenance du détecteur de rayonnement (S0, S1) indique au processeur (1) qu'un rayonnement à un niveau inférieur au premier niveau, mais supérieur à un second niveau est présent, le processeur (1) détermine un état de défaut.

8. Ensemble selon la revendication 7, **caractérisé en outre par**:
c) si la réponse apparente en provenance du détecteur (S0, S1) de rayonnement indique au processeur (1) qu'un rayonnement sous le second niveau est détecté, le processeur (1) augmente l'intensité du rayonnement généré par l'émetteur de rayonnement (E0, E1) jusqu'à ce que le détecteur de rayonnement (S0, S1) informe le processeur (1) que le rayonnement reçu est d'un niveau suffisant pour amener la réponse du détecteur à un niveau prédéterminé.

9. Ensemble selon l'une quelconque des revendications précédentes, dans lequel chacun desdits au moins deux modules (11, 12, 13) présentent pour l'essentiel la même construction.

10. Ensemble selon la revendication 9, dans lequel chacun desdits au moins deux modules (11, 12, 13) présents comporte une paire de détecteurs sensiblement identiques, connectés au processeur (1) du module de détection.

11. Ensemble selon la revendication 10, dans lequel le processeur (1) de l'un des deux modules (11, 12, 13) est adapté afin de répondre à chaque détecteur individuellement, et. de générer des signaux correspondants.

12. Ensemble selon la revendication 10 ou 11, dans lequel le processeur (1) de l'un des deux modules (11, 12, 13) est adapté afin de répondre aux signaux des deux détecteurs pour générer un seul signal de sortie.

13. Ensemble selon l'une quelconque des revendications précédentes, dans lequel les processeurs (1) des modules de détection des deux modules de détection au moins présents sont adaptés à surveiller les signaux de sortie en provenance du, ou de chaque détecteur associé, à des intervalles réguliers, espacés, respectivement différents.

14. Ensemble selon la revendication 13, dans lequel les intervalles sont sensiblement de 50 microsecondes et de 10 millisecondes, respectivement.

15. Ensemble selon la revendication 13 ou la revendication 14, lorsqu'elle dépend de l'une quelconque des revendications 5 à 8, dans lequel le processeur (1) du module de détection amène l'émetteur de rayonnement (E0, E1) à émettre un rayonnement auxdits intervalles.

16. Ensemble selon l'une quelconque des revendications précédentes, dans lequel le processeur (1) du module de détection est adapté à comparer le signal de sortie du détecteur par rapport à une valeur de seuil, et à générer ledit signal de sortie en accord avec la relation entre le signal de sortie du détecteur et la valeur de seuil.

17. Ensemble selon la revendication 16, dans lequel la valeur de seuil est définie en fonction de limites inférieure et supérieure déterminées antérieurement.

18. Ensemble selon la revendication 17, dans lequel le processeur (1) du module de détection est adapté à modifier une ou les deux limites inférieure et supérieure en fonction des signaux de sortie reçus du détecteur.

19. Ensemble selon la revendication 18, dans lequel les limites supérieure et/ou inférieure sont modifiées par le processeur (1) du module de détection si un nombre prédéterminé de signaux de sortie du détecteur tombent en dehors de la limite correspondante existante.

20. Ensemble selon l'une quelconque des revendications précédentes, dans lequel le processeur de chaque module de détection peut se configurer lui-même en fonction des demandes du ou de chacun des détecteurs du module (11, 12, 13) correspondant.

21. Ensemble selon la revendication 20, comprenant en outre une mémoire pour conserver des données pour permettre la réalisation du processus de configuration.

22. Ensemble selon au moins les revendications 4 et 5, dans lequel le processeur (1) du module de détection est adapté à un étalonnage du détecteur selon un mode pulsé.

23. Ensemble selon l'une quelconque des revendications précédentes, dans lequel les processeurs (1) de chaque module (11, 12, 13) sont adaptés pour délivrer un signal binaire.

24. Machine de traitement de billets de banque comprenant un système de transport, pour transporter des billets de banques selon un parcours de traitement; un contrôleur (10) de machine pour commander le fonctionnement du système de transport; et un ensemble de surveillance selon l'une quelconque des revendications précédentes, l'un desdits deux modules de détection (11, 12, 13) au moins présents, surveillant le passage de billets de banque le long du parcours de traitement, et l'autre module de détection surveillant la présence de billets de banque en un endroit de cette machine de traitement de billets de banque, le contrôleur (10) de machine étant piloté par l'ensemble de surveillance pour commander le système de transport.

25. Machine selon la revendication 24, dans laquelle la machine incorpore un poste d'empilement, l'autre module de détection détectant des billets de banque au poste d'empilement.
